# EUROPEAN PATENT SPECIFICATION

(11) **EP 3 351 116 B1**
(45) Date of publication and mention of the grant of the patent: **06.05.2020**
(21) Application number: 16846507.8
(22) Date of filing: 14.09.2016
(51) Int. Cl.: A23L 7/109

(54) **GROOVED NOODLES**
GERILLTE NUDELN
PÂTES RAINURÉES

(30) Priority: 14.09.2015 JP 2015180813
(43) Date of publication of application: 25.07.2018
(73) Proprietor: Nisshin Foods Inc., Tokyo 101-8441 (JP)
(72) Inventor: KIMURA, Ryusuke, Fujimino-city Saitama 356-8511 (JP); HIGASHI, Masafumi, Fujimino-city Saitama 356-8511 (JP)
(74) Representative: Casalonga
(86) International application number: PCT/JP2016/077099
(87) International publication number: WO 2017/047636

(56) References cited:
- EP-A2- 0 450 428
- JP-A- H0 646 780
- JP-A- H0 856 596
- JP-A- 2005 034 056
- JP-A- 2005 253 460
- JP-U- H0 595 290
- US-A1- 2012 135 123

## Description

### TECHNICAL FIELD

The present invention relates to a grooved noodle and particularly to a grooved noodle having a substantially circular configuration in cross section.

In particular, the present invention relates to a grooved noodle according to the preamble of claim 1, such as it is for example known from JP2005 253460A, JP H08 56596 A, JP 2005 034056A or JP H06 46780 A.

### BACKGROUND ART

Conventionally, there has been proposed a noodle having a slit or groove formed along a longitudinal direction of the noodle with an objective of achieving a shortened cooking time. For example, Patent Literature 1 discloses a noodle having a single wedge-shaped groove with a depth reaching the center of the substantially circular cross section thereof.

In addition, Patent Literature 2 discloses a noodle having two grooves formed at point-symmetric locations with respect to the center of a circular or elliptic cross section of the noodle and extending along an axial direction of the noodle.

Moreover, Patent Literature 3 discloses a noodle having two to four grooves that have cross sectional shapes spirally curving from a periphery of a circular core to the surface of the noodle in the cross section of the noodle.

In these conventional grooved noodles disclosed in Patent Literatures 1 to 3, the grooves extend linearly along the longitudinal directions of the noodles. That is, each groove extends in parallel with the central axis of the noodle along the longitudinal direction of the noodle.

### CITATION LIST

### PATENT LITERATURE

Patent Literature 1: JP 3658477 B
Patent Literature 2: JP 4796083 B
Patent Literature 3: JP 5102252 B

### SUMMARY OF INVENTION

### TECHNICAL PROBLEMS

When a noodle formed with a groove or grooves is dried to produce a dried noodle, however, a water evaporation rate of the noodle may be different between the surface thereof and the inside of each groove. Accordingly, bending of the dried noodle may occur.

In addition, since each groove of a noodle linearly extends along the longitudinal direction of the noodle, when noodles are bundled to be stored, and when noodles are cooked in boiling water, grooves of adjoining noodles may be caught with one another, so that noodles may be tangled and may adhere to one another. If noodles have been cooked as being tangled and adhering to one another, texture of the noodles may be impaired.

As short pasta and other like pasta, helical shaped pastas such as fusilli are known, and even if these types of short and small dried pasta pieces are bent, their appearance would not be impaired, and they would not experience the problem of getting tangled with one another. However, in the case of spaghetti or other long dried noodles, occurrence of bending and tangle of the noodles would largely degrade the noodle quality.

The present invention is made to overcome the above problem of the prior art and has an object of providing a grooved noodle which can achieve reduction in cooking time while occurrence of bending of the noodle is suppressed and noodles are prevented from getting tangled with one another.

### SOLUTION TO PROBLEMS

The present invention relates to a grooved noodle and particularly to a noodle formed with a single groove or a plurality of grooves along a longitudinal direction of the noodle and having a substantially circular configuration in cross section, and the single groove or the plurality of grooves extend helically in the longitudinal direction of the noodle, wherein the single groove or each of the plurality of grooves has a helical shape formed at a rotational pitch of 20° to 200° per a noodle length in the longitudinal direction 125 times a noodle diameter.

Preferably, the plurality of grooves comprise two to four grooves arranged at substantially equal intervals. In this case, the plurality of grooves are formed helically in the same direction.

Preferably, a cross sectional area of the single groove or the plurality of grooves accounts for 10 to 50% of a hypothetical cross sectional area of the noodle when it is assumed that no groove is provided.

### ADVANTAGEOUS EFFECTS OF INVENTION

According to the present invention, since a noodle is provided with a single groove or a plurality of grooves that extend helically in the longitudinal direction of the noodle, occurrence of bending of the noodle can be suppressed and noodles can be prevented from getting tangled with one another while reduction in cooking time is achieved.

### BRIEF DESCRIPTION OF DRAWINGS

FIG. 1 is a perspective view illustrating a grooved noodle according to Embodiment 1 of the present invention.
FIG. 2 is a cut end face view illustrating the grooved noodle according to Embodiment 1.
FIG. 3 is a perspective view illustrating a grooved noodle according to Embodiment 2.
FIG. 4 is a perspective view illustrating a grooved noodle according to a variation of Embodiment 2.
FIG. 5 is a perspective view illustrating a grooved noodle according to another variation of Embodiment 2.

### DESCRIPTION OF EMBODIMENTS

The present invention will be described below in detail based on preferred embodiments shown in the drawings.

### Embodiment 1

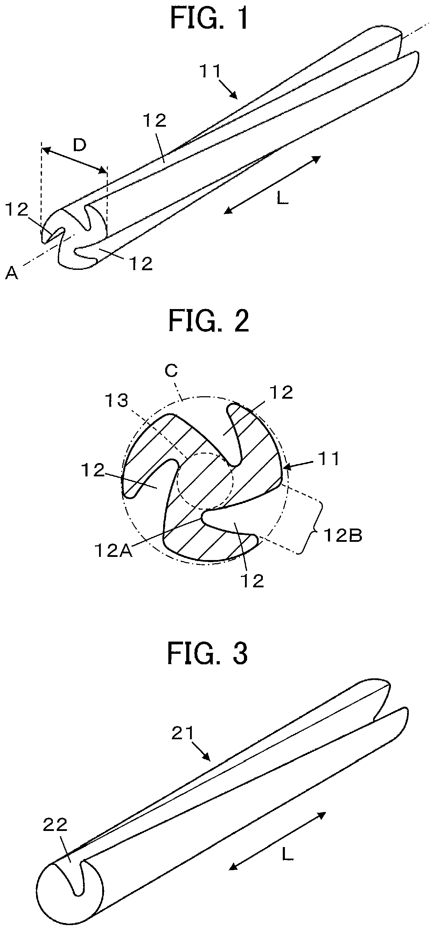

FIG. 1 illustrates a grooved noodle 11 according to Embodiment 1 of the present invention. The noodle 11 is consisted of a dried spaghetti noodle having a substantially circular configuration in cross section and elongated in a longitudinal direction of the noodle shown by "L" in the drawing. At an outer periphery of the noodle 11, three grooves 12 are formed along the longitudinal direction L.

The three grooves 12 are arranged equally at intervals of 120° along a circumferential direction of the noodle 11 and each helically extend in the longitudinal direction L. In other words, each of the grooves 12 does not extend in parallel with a central axis A of the noodle along the longitudinal direction L but extends in the longitudinal direction L while rotating in the circumferential direction of the noodle 11 so as to draw a helical shape around the central axis A.

The three grooves 12 are formed helically in a same direction to each other and each have a helical shape formed at a rotational pitch of 20° to 200° per a noodle length in the longitudinal direction thereof 125 times a noodle diameter D. The reason therefor is because, when the rotational pitch is smaller than 20°, the noodle may bend during the production process and the drying process, so that tangle of noodles may occur, while when the rotational pitch exceeds 200°, the noodle may also bend during the production process and the drying process. In order to prevent bending of the noodle and tangle of noodles, the rotational pitch of the grooves 12 is, within the above-described range, preferably 25° to 160°, more preferably 30° to 120°, and most preferably 45° to 90°.

It should be noted that the three grooves 12 do not necessarily have the same rotational pitch; even if the grooves separately have different rotational pitches, bending of the noodle and tangle of noodles can be prevented.

As illustrated in FIG. 2, the noodle has a substantially circular configuration in cross section, and assuming that the three grooves 12 were not provided to the noodle 11, the noodle 11 would have such a substantially circular cross sectional shape as a circle C.

At the center of the cross section of the noodle, a substantially circular core 13 is ensured. The core 13 is a solid region where no groove 12 exists. The three grooves 12 have cross sectional shapes spirally curving and extending from a periphery of the core 13 to a surface of the noodle in a same rotational direction, having the core 13 as the center. Each of the grooves 12 has a groove width that gradually increases as advancing from an innermost part 12A in contact with the periphery of the core 13 toward an opening part 12B at the surface of the noodle.

In addition, in the cross section of the noodle, the total cross sectional area of the three grooves 12 is set to account for 10 to 50% of a hypothetical cross sectional area of the noodle when the grooves 12 are not provided. If the proportion of the total cross sectional area of the grooves 12 is less than 10%, wall parts of the grooves 12 easily deform to cause bending of the noodle while the effect of shortening the cooking time of noodles becomes smaller, whereas, if the proportion of the total cross sectional area of the grooves 12 exceeds 50%, noodles easily get tangled while the noodle looses its hardness and may bend. The proportion of the total cross sectional area of the grooves 12 is, within the above-described range, preferably set to 15 to 40%. By setting the proportion within this range, both bending of the noodle and tangle of noodles can be effectively prevented.

The grooved noodle 11 as above can be produced by, for example, first producing a noodle without grooves, and subsequently forming the grooves 12 in the noodle with a cutting tool having a cutting edge shape that corresponds to the cross sectional shape of the grooves 12 while the noodle is rotated about its central axis. Alternatively, the noodle can be produced by extruding noodle dough from a die having an extrusion hole of a shape corresponding to the cross sectional shape of the noodle as illustrated in FIG. 2, while partially varying the feeding velocity of the noodle dough or the resistance value of the sliding surface of the die to generate a rotational force around the central axis so that the noodle is extruded as being rotated.

When the noodle 11 is placed in a high-temperature water for cooking, water and heat penetrate the noodle through the peripheral surface of the noodle. In this process, high-temperature water also enters the three grooves 12, and thus water and heat infiltrate into the noodle through not only the peripheral surface of the noodle but the inner walls of the three grooves 12, whereby the noodle 11 absorbs water to swell. At this time, since each of the grooves 12 has the groove width that gradually increases as advancing from the innermost part 12A toward the opening part 12B, the groove 12 can be readily closed so that the noodle would be able to provide the similar appearance and texture to those of the noodle without grooves.

The core 13 exists at the center in cross section of the noodle, and the grooves 12 do not reach the inside of the core 13. This configuration makes it hard for water and heat to penetrate the core 13. Therefore, when regions other than the core 13 in the noodle have been appropriately cooked, the core 13 is still slightly half-boiled.

Due to the existence of the grooves 12 and the core 13, it enables cooking within a short time while allowing a good texture (al dente) having a half-boiled region at the center of the noodle.

In Embodiment 1 described above, each of the three grooves 12 has a cross sectional shape that curves from the innermost part 12A toward the opening part 12B. However, the invention is not limited thereto, and the groove may be U-shaped or V-shaped linearly extending from the vicinity of the core 13 toward the surface of the noodle. In this case, the three grooves 12 may be arranged not spirally but radially from the vicinity of the core 13. That is, the grooves may be each arranged along the radial direction of the substantially circular configuration of the noodle.

In addition, while it is not particularly necessary to ensure the solid core 13, as long as the core 13 exits, as described above, good texture of the noodle owing to a half-boiled region at the center can be obtained and this is preferable.

### Embodiment 2

While the grooved noodle 11 according to Embodiment 1 has three grooves 12, a noodle may be provided with only a single groove 22 extending helically in the longitudinal direction L like a grooved noodle 21 illustrated in FIG. 3.

Similarly to the grooved noodle 11 according to Embodiment 1, the groove 22 has a helical shape formed at a rotational pitch of 20° to 200° per a noodle length in the longitudinal direction 125 times a noodle diameter, and a cross sectional area of the groove 22 is set to account for 10 to 50% of a hypothetical cross sectional area of the noodle when the groove 22 is not provided.

The grooved noodle 21 described above can also shorten the cooking time as compared to the noodle without a groove while occurrence of bending of the noodle can be suppressed and tangle of noodles can be prevented.

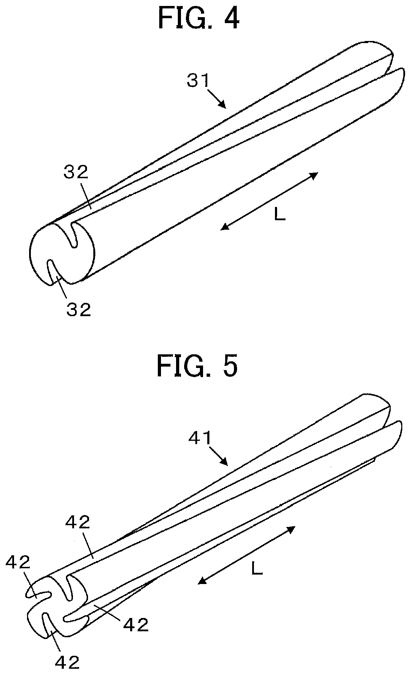

Similarly, a noodle may be provided with two grooves 32 extending helically in the longitudinal direction L like a grooved noodle 31 illustrated in FIG. 4.

The two grooves 32 are arranged equally at intervals of 180° along the circumferential direction of the noodle 31 and are formed in helical shape extending in a same direction and at a rotational pitch of 20° to 200° per a noodle length in the longitudinal direction 125 times a noodle diameter. The total cross sectional area of the two grooves 32 is set to account for 10 to 50% of a hypothetical cross sectional area of the noodle when the grooves 32 are not provided.

The grooved noodle 31 described above can also shorten the cooking time as compared to the noodle without grooves while occurrence of bending of the noodle can be suppressed and tangle of noodles can be prevented.

In addition, a noodle may be provided with four grooves 42 extending helically in the longitudinal direction L like a grooved noodle 41 illustrated in FIG. 5.

The four grooves 42 are arranged equally at intervals of 90° along the circumferential direction of the noodle 41 and are formed in helical shape extending in a same direction and at a rotational pitch of 20° to 200° per a noodle length in the longitudinal direction 125 times a noodle diameter. The total cross sectional area of the four grooves 42 is set to account for 10 to 50% of a hypothetical cross sectional area of the noodle when the grooves 42 are not provided.

The grooved noodle 41 described above can also shorten the cooking time as compared to the noodle without grooves while occurrence of bending of the noodle can be suppressed and tangle of noodles can be prevented.

Furthermore, a grooved noodle may have five or more grooves extending helically in the longitudinal direction L in the similar manner.

Each of the grooves 22, 32 and 42 of the grooved noodles 21, 31 and 41 illustrated in FIGS. 3, 4 and 5 is merely required to extend helically in the longitudinal direction L and may be a U-shaped groove or V-shaped groove that linearly extends from the vicinity of the core toward the surface of the noodle, and may be a groove disposed along the radial direction of the substantially circular configuration of the noodle.

### EXAMPLES

Such grooved noodles each having a single groove as illustrated in FIG. 3 were produced, with the rotational pitch of the groove being variously varied.

### Example 1

Dough was obtained by mixing 26 parts by weight of water with 100 parts by weight of durum semolina and kneading the resulting mixture. A die having an extrusion hole of a shape corresponding to the cross sectional shape of the noodle with a single groove as illustrated in FIG. 3 was attached to a pasta machine, from which the thus kneaded dough was extruded under a pressure-reduced condition of -600 mmHg. In this process, by varying the connection angle between a conduit for pushing the dough into the die and the die so that the feeding rate of the dough to be pushed into the respective parts of the die was adjusted, a spaghetti noodle having a helical groove was formed and cut at every 2 m length in the longitudinal direction. The cut spaghetti noodles were hung and subjected to the initial drying process and the main drying process by a conventional method to thereby produce dried spaghetti noodles.

The connection angle between the conduit for pushing the dough into the die and the die was adjusted such that the dried spaghetti noodles of Example 1 each having a noodle diameter of 2 mm and the groove formed at the rotational pitch of 15° per a noodle length in the longitudinal direction 125 times the noodle diameter were obtained. The cross sectional area of the groove accounted for 25% of a hypothetical cross sectional area of the noodle when the groove is not provided.

### Examples 2 to 10

The connection angle between the conduit for pushing the dough into the die and the die was adjusted such that the rotational pitches of the groove would become 20°, 30°, 45°, 60°, 90°, 120°, 160°, 200° and 220° per a noodle length in the longitudinal direction 125 times the noodle diameter; other than that, the dried spaghetti noodles of Examples 2 to 10 were produced in the same manner as that in Example 1.

### Comparative Example 1

The connection angle between the conduit for pushing the dough into the die and the die was adjusted such that the groove would extend not helically but linearly along the longitudinal direction, that is, the rotational pitch would become 0°; other than that, the dried spaghetti noodles of Comparative Example 1 were produced in the same manner as that in Example 1.

### Evaluation on bending

From the dried spaghetti noodles of each of Examples 1 to 10 and Comparative Example 1, spaghetti noodles that have bent during the drying process were taken out and the number thereof was counted. The number (%) of the bent spaghetti noodles per 100 spaghetti noodles was adopted as an evaluation value in the evaluation on bending.

### Adhesion evaluation

The dried spaghetti noodles obtained in each of Examples 1 to 10 and Comparative Example 1 were cut into a length of 25 cm, the thus cut spaghetti noodles were divided into bundles of 100 spaghetti noodles each, and the bundles were placed in a pan filled with hot water to be immersed, and cooked in boiling water for three minutes. Upon completion of cooking, the spaghetti noodles were taken out and were sorted one by one so that the number of those being tangled and adhering to one another was counted. The number (%) of adhering spaghetti noodles per 100 spaghetti noodles was adopted as an evaluation value in the adhesion evaluation.

The evaluation results are shown in Table 1 below.

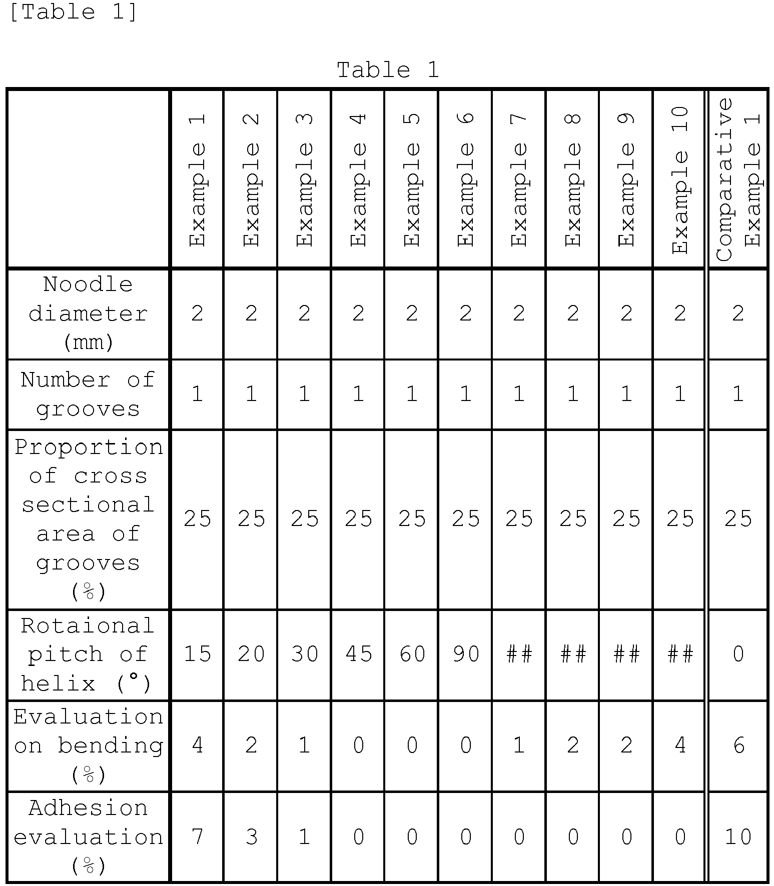

As is seen from Table 1, every example of Examples 1 to 10 in which each dried spaghetti noodle had a helical groove showed the result of evaluation on bending of 4% or less, revealing that occurrence of bending during the drying process was low. In particular, in Examples 2 to 9 in which the rotational pitch of the groove was 20° to 200°, the result of evaluation on bending was 2% or less; in Examples 3 to 7 in which the rotational pitch of the groove was 30° to 120°, the result of evaluation on bending was 1% or less; and in Examples 4 to 6 in which the rotational pitch of the groove was 45° to 90°, no spaghetti noodle that had bent was found per 100 spaghetti noodles.

On the contrary, Comparative Example 1 in which each dried spaghetti noodle had not a helical groove but a linear groove showed the result of evaluation on bending of 6%, indicating that occurrence of bending during the drying process was notably high.

In addition, every example of Examples 1 to 10 in which each dried spaghetti noodle had a helical groove showed the result of adhesion evaluation of 7% or less, revealing that occurrence of adhesion among noodles upon completion of cooking was low. In particular, in Examples 2 to 10 in which the rotational pitch of the groove was not smaller than 20°, the result of adhesion evaluation was 3% or less; in Examples 3 to 10 in which the rotational pitch of the groove was not smaller than 30°, the result of adhesion evaluation was 1% or less; and in Examples 4 to 10 in which the rotational pitch of the groove was not smaller than 45°, no spaghetti noodle that had adhered to one another was found per 100 spaghetti noodles.

On the contrary, Comparative Example 1 in which each dried spaghetti noodle had not a helical groove but a linear groove showed the result of adhesion evaluation of 10%, indicating that occurrence of tangle and adhering of noodles was notably high.

Next, such grooved noodles each having three grooves as illustrated in FIG. 1 were produced, with the rotational pitch of the grooves being variously varied.

### Example 11

A die having an extrusion hole of a shape corresponding to the cross sectional shape of the noodle with three grooves as illustrated in FIG. 1 was attached to a pasta machine, and the dried spaghetti noodles of Example 11 each having a noodle diameter of 2 mm and the grooves formed at the rotational pitch of 15° per a noodle length in the longitudinal direction 125 times the noodle diameter were obtained in the same manner as that in Example 1. The cross sectional area of the grooves accounted for 29% of a hypothetical cross sectional area of the noodle when the grooves are not provided.

### Examples 12 to 20

The connection angle between the conduit for pushing the dough into the die and the die was adjusted such that the rotational pitches of the groove would become 20°, 30°, 45°, 60°, 90°, 120°, 160°, 200° and 220° per a noodle length in the longitudinal direction 125 times the noodle diameter; other than that, the dried spaghetti noodles of Examples 12 to 20 were produced in the same manner as that in Example 11.

### Comparative Example 2

The connection angle between the conduit for pushing the dough into the die and the die was adjusted such that the groove would extend not helically but linearly along the longitudinal direction, that is, the rotational pitch would become 0°; other than that, the dried spaghetti noodles of Comparative Example 2 were produced in the same manner as that in Example 11.

### Evaluation on bending

From the dried spaghetti noodles of each of Examples 11 to 20 and Comparative Example 2, spaghetti noodles that have bent during the drying process were taken out and the number thereof was counted. The number (%) of the bent spaghetti noodles per 100 spaghetti noodles was adopted as an evaluation value in the evaluation on bending.

### Adhesion evaluation

The dried spaghetti noodles obtained in each of Examples 11 to 20 and Comparative Example 2 were cut into a length of 25 cm, the thus cut spaghetti noodles were divided into bundles of 100 spaghetti noodles each, and the bundles were placed in a pan filled with hot water to be immersed, and cooked in boiling water for three minutes. Upon completion of cooking, the spaghetti noodles were taken out and were sorted one by on so that the number of those adhering to one another was counted. The number (%) of adhering spaghetti noodles per 100 spaghetti noodles was adopted as an evaluation value in the adhesion evaluation.

The evaluation results are shown in Table 2 below.

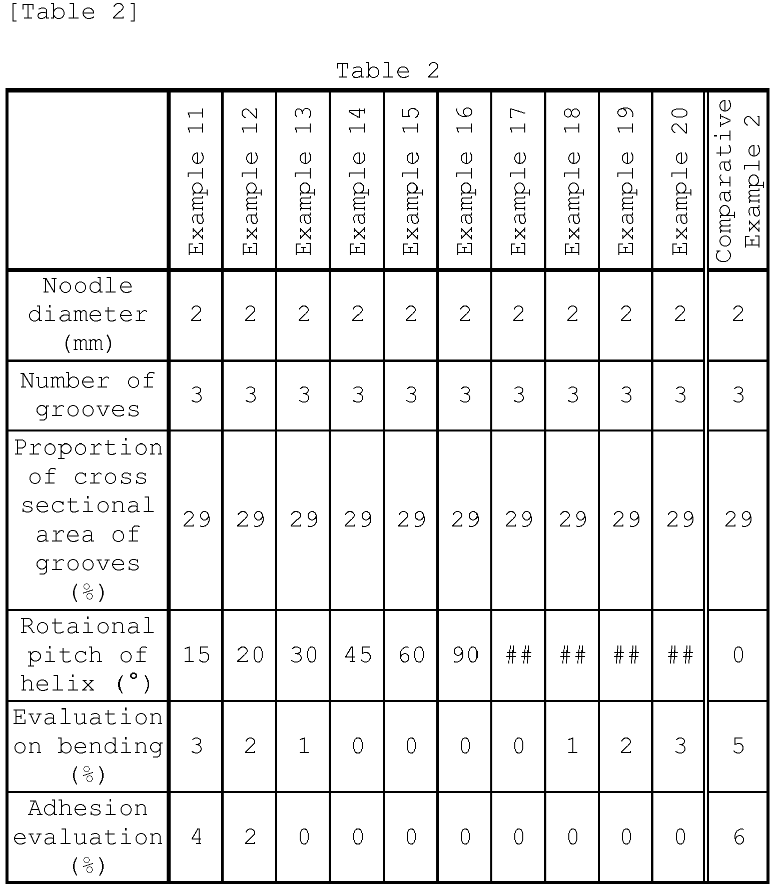

As is seen from Table 2, every example of Examples 11 to 20 in which each dried spaghetti noodle had three helical grooves showed the result of evaluation on bending of 3% or less, revealing that occurrence of bending during the drying process was low. In particular, in Examples 12 to 19 in which the rotational pitch of the grooves was 20° to 200°, the result of evaluation on bending was 2% or less; in Examples 13 to 18 in which the rotational pitch of the grooves was 30° to 160°, the result of evaluation on bending was 1% or less; and in Examples 14 to 17 in which the rotational pitch of the grooves was 45° to 120°, no spaghetti noodle that had bent was found per 100 spaghetti noodles.

On the contrary, Comparative Example 2 in which each dried spaghetti noodle had not helical grooves but linear grooves showed the result of evaluation on bending of 5%, indicating that occurrence of bending during the drying process was notably high.

In addition, every example of Examples 11 to 20 in which each dried spaghetti noodle had helical grooves showed the result of adhesion evaluation of 4% or less, indicating that occurrence of adhesion among noodles upon completion of cooking was low. Particularly, in Examples 12 to 20 in which the rotational pitch of the grooves was not smaller than 20°, the result of adhesion evaluation was 2% or less; and in Examples 13 to 20 in which the rotational pitch of the grooves was not smaller than 30°, no spaghetti noodle that had adhered to one another was found per 100 spaghetti noodles.

On the contrary, Comparative Example 2 in which each dried spaghetti noodle had not a helical groove but a linear groove showed the result of adhesion evaluation of 6%, indicating that occurrence of tangle and adhering of noodles was notably high.

### REFERENCE SIGNS LIST

11, 21, 31, 41: grooved noodle, 12, 22, 32, 42: groove, 12A: innermost part, 12B: opening part, A: central axis, L: longitudinal direction, D: noodle diameter, C: circle

## Claims

1. A grooved noodle (11, 21, 31, 41) having a single groove or a plurality of grooves (12, 22, 32, 42) formed along a longitudinal direction of the noodle and having a substantially circular configuration in cross section,
wherein the single groove or the plurality of grooves (12, 22, 32, 42) extend helically in the longitudinal direction (L) of the noodle, **characterized in that**
the single groove or each of the plurality of grooves (12, 22, 32, 42) has a helical shape formed at a rotational pitch of 20° to 200° per a noodle length in the longitudinal direction (L) 125 times a noodle diameter (D).

2. The grooved noodle (11, 21, 31, 41) according to claim 1, wherein the plurality of grooves (12, 22, 32, 42) comprise two to four grooves (12, 22, 32, 42) arranged at substantially equal intervals.

3. The grooved noodle (11, 21, 31, 41) according to claim 2, wherein the plurality of grooves (12, 22, 32, 42) are formed helically in a same direction.

4. The grooved noodle (11, 21, 31, 41) according to any one of claims 1 to 3, wherein a cross sectional area of the single groove or the plurality of grooves (12, 22, 32, 42) accounts for 10 to 50 % of a hypothetical cross sectional area of the noodle when it is assumed that no groove is provided.

## Patentansprüche

1. Gerillte Nudel (11, 21, 31, 41) mit einer einzelnen Rille oder einer Vielzahl von Rillen (12, 22, 32, 42), die entlang einer Längsrichtung der Nudel ausgebildet ist und im Wesentlichen eine kreisförmige Anordnung im Querschnitt aufweist,
wobei sich die einzelne Rille oder die Vielzahl von Rillen (12, 22, 32, 42) spiralförmig in der Längsrichtung (L) der Nudel erstrecken,
**dadurch gekennzeichnet, dass**
die einzelne Rille oder jede der Vielzahl von Rillen (12, 22, 32, 42) eine Spiralform hat, die mit einer Drehsteigung von 20° bis 200° pro Nudellänge in der Längsrichtung (L) gebildet ist, die dem 125-fachen eines Nudeldurchmessers (D) entspricht.

2. Gerillte Nudel (11, 21, 31, 41) nach Anspruch 1, wobei die Vielzahl von Rillen (12, 22, 32, 42) zwei bis vier Rillen (12, 22, 32, 42) umfasst, die im Wesentlichen in gleichen Abständen angeordnet sind.

3. Gerillte Nudel (11, 21, 31, 41) nach Anspruch 2, wobei die Vielzahl von Rillen (12, 22, 32, 42) spiralförmig in derselben Richtung ausgebildet ist.

4. Gerillte Nudel (11, 21, 31, 41) nach einem der Ansprüche 1 bis 3, wobei eine Querschnittsfläche der einzelnen Rille oder der Vielzahl von Rillen (12, 22, 32, 42) 10 bis 50% einer hypothetischen Querschnittsfläche der Nudel ausmacht, unter der Annahme, dass keine Rille vorgesehen ist.

## Revendications

1. Pâte rainurée (11, 21, 31, 41), ayant une rainure unique ou une pluralité de rainures (12, 22, 32, 42), formées le long d'une direction longitudinale de la pâte et ayant une configuration sensiblement circulaire en coupe transversale,
dans laquelle la rainure unique ou la pluralité de rainures (12, 22, 32, 42) s'étend de manière hélicoïdale dans la direction longitudinale (L) de la pâte,
**caractérisée en ce que**
la rainure unique ou chaque rainure parmi la pluralité de rainures (12, 22, 32, 42) a une structure hélicoïdale, formée suivant un pas de rotation de 20° à 200° par longueur de pâte dans la direction longitudinale (L), 125 fois le diamètre (D) d'une pâte.

2. Pâte rainurée (11, 21, 31, 41) selon la revendication 1,
dans laquelle la pluralité de rainures (12, 22, 32, 42) comprend deux à quatre rainures (12, 22, 32, 42), agencées suivant des intervalles sensiblement égaux.

3. Pâte rainurée (11, 21, 31, 41) selon la revendication 2,
dans laquelle la pluralité de rainures (12, 22, 32, 42) est formée de manière hélicoïdale dans une même direction.

4. Pâte rainurée (11, 21, 31, 41) selon l'une quelconque des revendications 1 à 3,
dans laquelle une surface transversale de la rainure unique ou de la pluralité de rainures (12, 22, 32, 42) constitue 10 à 50 % d'une surface transversale hypothétique de la pâte, lorsqu'il est supposé qu'il n'est prévu aucune rainure.
